(19) Europäisches Patentamt / European Patent Office / Office européen des brevets

(11) **EP 2 205 462 B1**

(12) **FASCICULE DE BREVET EUROPEEN**

(45) Date de publication et mention de la délivrance du brevet:
**04.07.2018 Bulletin 2018/27**

(21) Numéro de dépôt: **08849085.9**

(22) Date de dépôt: **01.10.2008**

(51) Int Cl.:
*B60Q 3/00* ^(2017.01)     *B61D 29/00* ^(2006.01)
*B61D 27/00* ^(2006.01)

(86) Numéro de dépôt international:
**PCT/FR2008/051769**

(87) Numéro de publication internationale:
**WO 2009/063148 (22.05.2009 Gazette 2009/21)**

(54) **VEHICULE DE TRANSPORT NOTAMMENT VOITURE FERROVIAIRE COMPRENANT UN DISPOSITIF D'ECLAIRAGE D'HABITACLE**

TRANSPORTFAHRZEUG, INSBESONDERE EIN SCHIENENWAGEN, MIT EINER VORRICHTUNG ZUR PASSAGIERRAUMBELEUCHTUNG

TRANSPORT VEHICLE, IN PARTICULAR A RAILWAY CARRIAGE, COMPRISING A PASSENGER COMPARTMENT LIGHTING DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **01.10.2007 FR 0757978**

(43) Date de publication de la demande:
**14.07.2010 Bulletin 2010/28**

(73) Titulaire: **ALSTOM Transport Technologies 93400 Saint-Ouen (FR)**

(72) Inventeurs:
• **LECLERCQ, Bernard**
  **F-59300 Famars (FR)**
• **GARNICHE, François**
  **F-59159 Marcoing (FR)**
• **DEVULDER, Guy**
  **F-59990 Estreux (FR)**
• **ANDRIES, Véronique**
  **F-59160 Villeneuve D'ascq (FR)**

(74) Mandataire: **Lavoix**
  **2, place d'Estienne d'Orves**
  **75441 Paris Cedex 09 (FR)**

(56) Documents cités:
**DE-A1- 10 218 659      FR-A- 2 875 453**
**US-A- 3 211 904        US-A1- 2003 172 156**
**US-B1- 6 536 928**

**Description**

La présente invention concerne un véhicule de transport notamment une voiture ferroviaire comprenant au moins un habitacle, chaque habitacle comportant une pluralité de sièges pour des passagers, et un dispositif d'éclairage de l'habitacle, ledit dispositif comprenant :

- au moins une source lumineuse, fixée à l'intérieur de l'habitacle,
- une unité de commande, reliée à la source lumineuse.

La présente invention concerne également un procédé d'éclairage d'un habitacle d'un véhicule de transport, muni d'un dispositif d'éclairage comprenant au moins une source lumineuse, fixée à l'intérieur de l'habitacle, une unité de commande, reliée à la source lumineuse.

Un véhicule de transport, notamment une voiture ferroviaire, comporte un habitacle comprenant une pluralité de sièges pour des passagers, dans lequel est prévu un dispositif d'éclairage pour le confort des passagers.

Le dispositif d'éclairage de l'habitacle comprend au moins une source lumineuse, fixée à l'intérieur de l'habitacle, par exemple au plafond, et une unité de commande reliée à la source lumineuse.

L'unité de commande pilote alors chaque source lumineuse, afin qu'elle fournisse une puissance lumineuse correspondant à une ou plusieurs valeur(s) d'éclairement lumineux souhaité(s) dans l'habitacle. Les valeurs d'éclairement sont prédéterminées et peuvent par exemple correspondre à une valeur de jour et une valeur de nuit. Les valeurs sont en particulier choisies afin d'avoir un éclairement total suffisant par temps nuageux, si bien que l'éclairement total est plus important que nécessaire par temps ensoleillé. Le choix de ces valeurs est délicat.

Ainsi, la ou chaque source lumineuse délivre souvent une puissance lumineuse trop importante par temps ensoleillé, entraînant ainsi une consommation d'énergie inutile.

FR 2 875 453 A1 décrit un dispositif d'éclairage pour véhicule automobile comportant des sources d'éclairage de l'intérieur d'un habitacle du véhicule et des moyens de mesure de la luminosité, ainsi qu'une unité de commande reliée aux sources lumineuses.

US 6,536,928 B1 décrit un véhicule automobile comprenant un habitacle et des dispositifs d'éclairage de l'habitacle.

Le document US 7,221,271 B2 décrit un dispositif et un procédé de gestion de la lumière pour un habitacle de véhicule automobile. Ce dispositif comprend au moins une source lumineuse, une unité de commande, et un capteur de détection de mouvement. L'unité de commande pilote alors la ou chaque source lumineuse en fonction du signal fourni par le capteur de détection de mouvement. Elle peut en particulier allumer ou éteindre une source lumineuse en fonction du mouvement de la main d'une personne, ou encore diriger la lumière dans la direction de la main. L'unité de commande détermine également l'intensité de la source lumineuse en fonction de la distance séparant la personne du capteur de détection de mouvement.

Toutefois, avec le dispositif décrit dans le document US 7,221,271 B2 l'éclairement lumineux total est plus important par temps ensoleillé que par temps nuageux, entraînant une consommation inutile d'énergie.

Le but de l'invention est donc de réduire la consommation d'énergie due au dispositif d'éclairage d'un véhicule de transport.

L'invention a donc pour objet un véhicule de transport selon la revendication 1.

Suivant d'autres modes de réalisation, le véhicule de transport est selon l'une quelconque des revendications 2 à 9.

L'invention a également pour objet un procédé d'éclairage selon la revendication 10.

Les caractéristiques et avantages de l'invention apparaîtront au cours de la description qui va suivre, donnée à titre d'exemple et faite en référence aux dessins annexés, sur lesquels :

- la figure 1 est une vue en coupe transversale d'une voiture ferroviaire selon l'invention,
- la figure 2 est un schéma synoptique d'un dispositif d'éclairage et d'un système de climatisation d'une voiture ferroviaire selon l'invention, et
- la figure 3 est un organigramme de fonctionnement d'un programme du dispositif d'éclairage, et

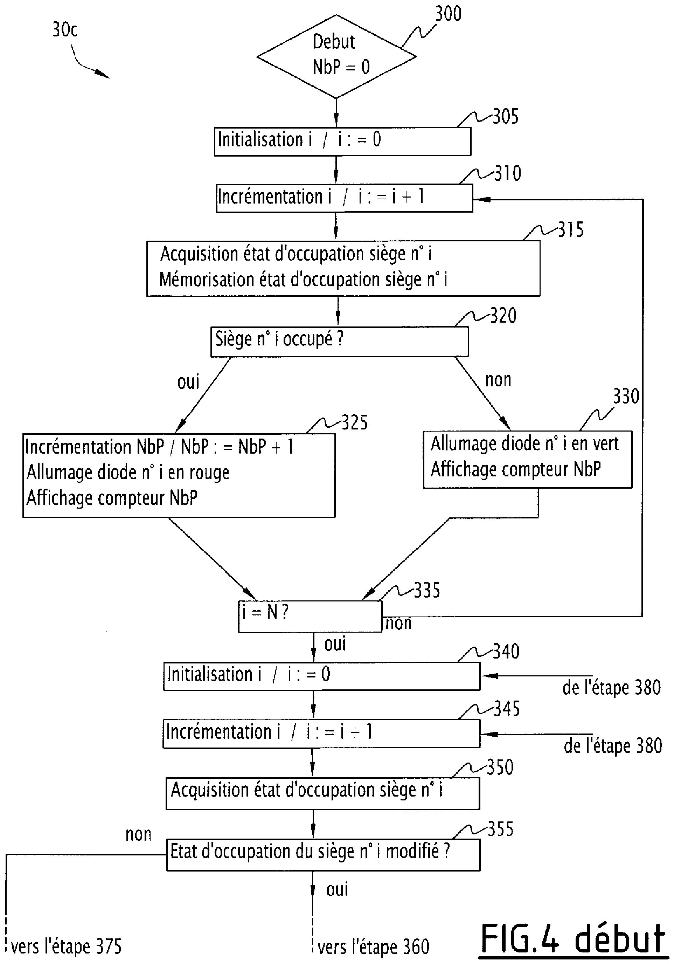

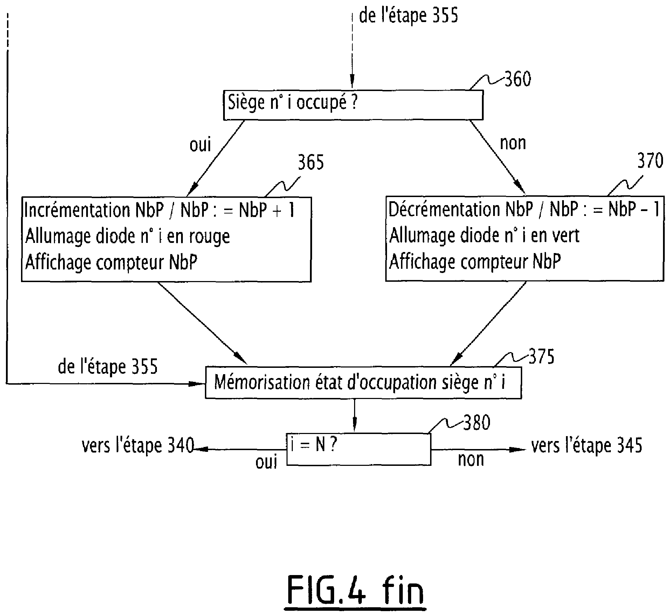

- la figure 4 est un organigramme de fonctionnement d'un programme d'un moyen d'affichage de l'occupation des sièges.

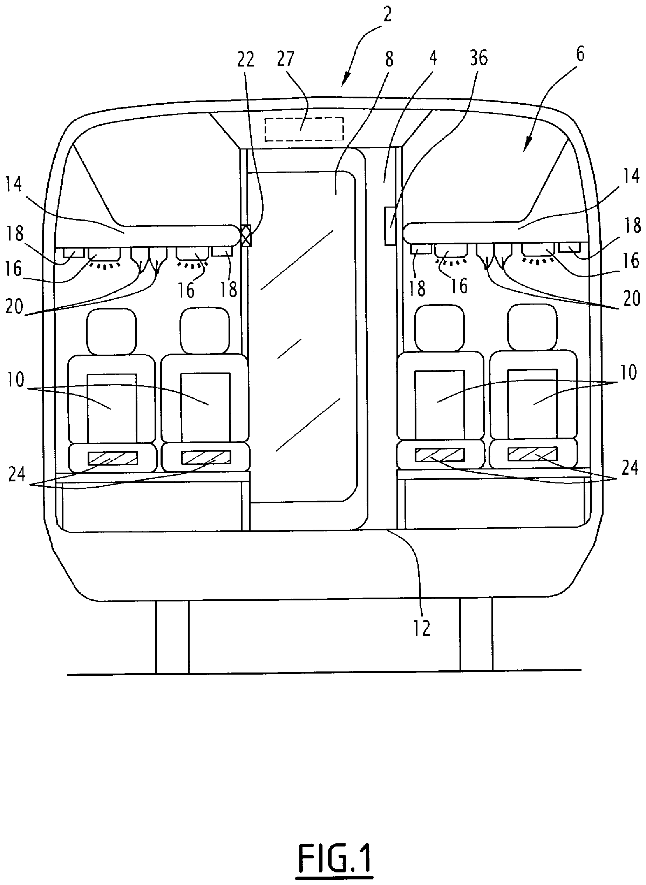

La voiture ferroviaire 2 de la figure 1 comprend une plateforme d'accès 4 et un habitacle 6, séparés par une porte d'accès 8.

L'habitacle 6 comprend un nombre N de sièges 10, répartis en plusieurs rangées transversales de quatre sièges 10. Les sièges 10 sont regroupés deux par deux sur chaque rangée, de part et d'autre d'un couloir 12. Le couloir 12 traverse l'habitacle 6 longitudinalement.

Des étagères à bagages 14 se trouvent de chaque côté de l'habitacle 6 au-dessus des sièges 10. Les étagères à bagages 14 ont une structure creuse, apte à recevoir des faisceaux de câbles électriques ou des canalisations d'air.

La voiture 2 est équipée d'un dispositif 15 d'éclairage de l'habitacle 6. Pour chaque siège 10, le dispositif d'éclairage 15 comprend une source lumineuse 16 et une commande individuelle 18 d'intensité d'éclairage. Par ailleurs, une bouche d'aération 20 est prévue pour chaque siège 10. Les sources lumineuses 16, les commandes individuelles 18 et les bouches d'aération 20 sont, par exemple, fixées sous les étagères à bagages 14.

Les sources lumineuses 16 sont, par exemple, des éclairages à diodes électroluminescentes.

Au moins un capteur de lumière 22 du dispositif d'éclairage 15 est fixé à l'intérieur de l'habitacle 6. Lorsqu'il y a un seul capteur de lumière 22, il est par exemple situé au centre de l'habitacle 6, sur le côté d'une étagère 14 près du couloir 12. Lorsqu'il y a plusieurs capteurs 22, ils sont répartis dans l'habitacle 6.

Le ou chaque capteur 22 est par exemple une photodiode, un phototransistor ou une cellule photoélectrique, ou encore tout autre composant permettant de mesurer un éclairement lumineux et de convertir la valeur de l'éclairement en un signal électrique.

Chaque siège 10 est muni d'un capteur de présence 24 de passagers. Les capteurs de présence 24 sont par exemple des capteurs de pression logés dans l'assise du siège 10, des capteurs infrarouges situés à proximité du siège 10, ou encore tout autre composant apte à détecter la présence d'un passager et à envoyer ensuite un signal électrique correspondant, par exemple un signal de type « tout ou rien ».

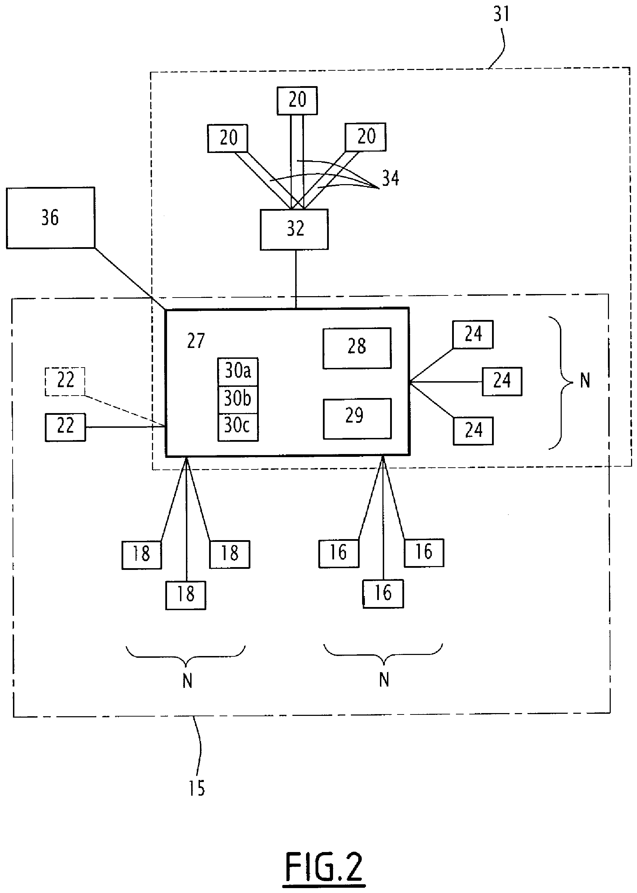

Le dispositif d'éclairage 15 de l'habitacle 6 comprend en outre, sur la figure 2, une unité de commande 27 reliée aux sources lumineuses 16, aux commandes individuelles 18 d'intensité d'éclairage, à le ou chaque capteur de lumière 22, et aux capteurs de présence 24.

L'unité de commande 27 comporte une unité de traitement d'information formée par exemple d'un processeur de données 28, associée à une mémoire 29, apte à stocker des programmes 30.

L'unité de commande 27 est située, par exemple, dans une zone au-dessus de la porte 8. Elle est reliée aux sources lumineuses 16 pour leur commande et aux commandes individuelles 18, au capteur de lumière 22, et aux capteurs de présence 24 pour recevoir des informations, par l'intermédiaire de faisceaux de câbles électriques, qui s'étendent par exemple longitudinalement à l'intérieur des étagères 14.

Un système de climatisation 31 de l'habitacle 6 comprend l'unité de commande 27, relié aux capteurs de présence 24, ainsi qu'un clapet 32 d'entrée d'air frais, lui-même relié aux bouches d'aération 20, par l'intermédiaire de conduits d'aération 34. Les conduits d'aération 34 sont par exemple situés à l'intérieur des étagères 14, si les bouches d'aération sont fixées sous les étagères 14, ou bien dans les parois latérales de l'habitacle 6, si les bouches d'aération sont fixées sur le côté des sièges 10.

Un moyen d'affichage 36 de l'occupation des sièges 10 est également relié à l'unité de commande 27 et il est apte à indiquer l'état d'occupation de chaque siège 10, en fonction du signal fourni par le capteur de présence 24.

Le moyen d'affichage 36 de l'occupation des sièges comporte, par exemple, un panneau muni de diodes électroluminescentes disposées en rangées, à l'identique des sièges 10 dans l'habitacle 6, le nombre de diodes électroluminescentes étant identique au nombre N de sièges 10. Le moyen d'affichage 36 comprend également un affichage à cristaux liquides, apte à indiquer un nombre NbP de sièges 10 occupés dans l'habitacle 6. Les diodes électroluminescentes du moyen d'affichage 36 sont par exemple des diodes aptes à fournir un rayonnement lumineux avec différentes valeurs de spectre lumineux, correspondant notamment au rouge et au vert. L'état d'occupation de chaque siège 10 est notamment occupé, associé à une couleur rouge de la diode, ou libre, associé à une couleur verte de la diode.

L'unité de commande 27 est ainsi apte à recevoir des signaux du ou des capteur(s) de lumière 22, des capteurs de présence 24 ou des commandes individuelles 18, et apte à envoyer des consignes aux sources lumineuses 16, au clapet 32 ou au moyen d'affichage 36.

Les consignes, décrites ci-dessus, envoyées par l'unité de commande 27 sont fonction de l'exécution des différents programmes 30.

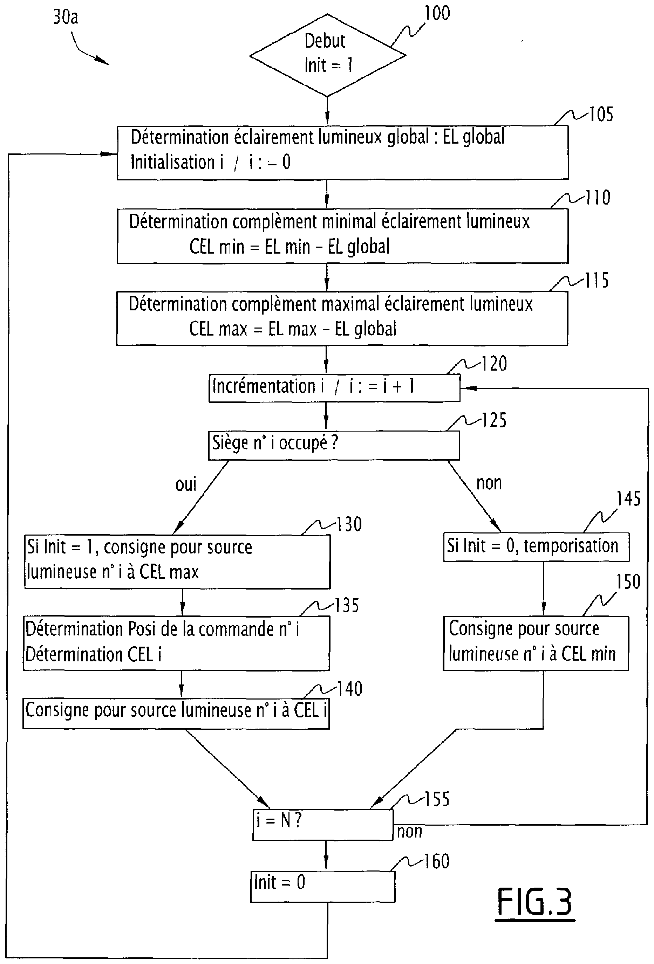

Sur la figure 3, un programme 30a correspondant au dispositif d'éclairage 15 débute par l'étape 100, où une variable Init est fixée à 1. La variable Init permet de savoir si une boucle qui est fonction du numéro i du siège 10 est exécutée pour la première fois.

A l'étape 105, l'unité de commande 27 détermine la valeur d'éclairement lumineux global $EL_{global}$, en fonction du signal de mesure de l'éclairement lumineux fourni par le ou chaque capteur de lumière 22 et initialise le numéro i du siège 10 à zéro. Si le dispositif d'éclairage 15 comporte un seul capteur de lumière 22, alors la valeur d'éclairement lumineux global $EL_{global}$ est égale à la mesure de l'éclairement lumineux fourni par le capteur 22. Si le dispositif d'éclairage 15 comporte plusieurs capteurs de lumière 22, alors l'unité de commande 27 détermine la valeur d'éclairement lumineux global $EL_{global}$, en effectuant une moyenne, éventuellement pondérée, des différentes mesures de l'éclairement lumineux effectuées par les capteurs de lumière 22.

A l'étape 110, l'unité de commande 27 détermine une valeur du complément minimal d'éclairement lumineux $CEL_{min}$. La valeur $CEL_{min}$ est égale à la différence entre une valeur minimale d'éclairement lumineux souhaité $EL_{min}$ et la valeur d'éclairement lumineux global $EL_{global}$ :

$$CEL_{min} = EL_{min} - EL_{global}$$

La valeur minimale d'éclairement lumineux souhaité $EL_{min}$ est paramétrable, et par exemple égale à 50 lux, ce qui correspond à un minimum recommandé par des normes de confort.

A l'étape 115, l'unité de commande 27 détermine une valeur de complément maximal d'éclairement lumineux $CEL_{max}$. La valeur $CEL_{max}$ est égale à la différence entre une valeur maximale d'éclairement lumineux souhaité $EL_{max}$ et la valeur d'éclairement lumineux global $EL_{global}$ :

$$CEL_{max} = EL_{max} - EL_{global}$$

La valeur maximale d'éclairement lumineux souhaité $EL_{max}$ est paramétrable et par exemple égale à 150 lux.

A l'étape 120, le numéro i du siège 10 est incrémenté d'une unité.

A l'étape 125, l'unité de commande 27 effectue l'acquisition du signal issu du capteur de présence 24 du siège 10 n° i et détermine si le siège 10 n° i est occupé ou non. Si le siège 10 n° i est occupé, le programme 30a passe à l'étape 130, et si le siège 10 n° i est libre, le programme 30a passe à l'étape 145.

A l'étape 130, si la valeur de la variable Init est 0, alors le programme 30a passe directement à l'étape 135. Si la valeur de la variable Init est 1, alors l'unité de commande 27 envoie une consigne correspondant à la valeur $CEL_{max}$ à destination de la source lumineuse 16 n° i. Si la valeur $CEL_{max}$ est en particulier négative, alors l'unité de commande 27 commande l'extinction de la source lumineuse 16 n° i.

A l'étape 135, l'unité de commande 27 détermine la position $Pos_i$ de la commande individuelle 18 n° i. La valeur $Pos_i$ est exprimée en pourcentage en fonction de la position de la commande individuelle 18 n° i, avec la convention suivante : pour la position correspondant à une intensité d'éclairage minimal, la valeur $Pos_i$ est égale à 0%, et pour la position correspondant à une intensité d'éclairage maximal, la valeur $Pos_i$ est égale à 100%. L'unité de commande 27 calcule alors une valeur de complément d'éclairement lumineux $CEL_i$ pour le siège 10 n° i. La valeur $CEL_i$ est égale à la différence entre la valeur $CEL_{max}$ et la valeur $CEL_{min}$, multipliée par la valeur $Pos_i$, ajoutée à la valeur $CEL_{min}$, si les valeurs $CEL_{max}$ et $CEL_{min}$ sont positives. La valeur $CEL_i$ est égale à la valeur $CEL_{max}$ multipliée par la valeur $Pos_i$, si la valeur $CEL_{max}$ est positive et la valeur $CEL_{min}$ négative. La valeur $CEL_i$ est nulle, si les valeurs $CEL_{max}$ et $CEL_{min}$ sont négatives :

$$CEL_i = CEL_{min} + (CEL_{max} - CEL_{min}) \times Pos_i \; ; \; si \; CEL_{max} > 0 \; et \; CEL_{min} > 0$$

$$CEL_i = CEL_{max} \times Pos_i \; ; \; si \; CEL_{max} > 0 \; et \; CEL_{min} \leq 0$$

$$CEL_i = 0 \; ; \; si \; CEL_{max} \leq 0 \; et \; CEL_{min} \leq 0$$

A l'étape 140, l'unité de commande 27 envoie une consigne correspondant à la valeur précédemment calculée $CEL_i$ à destination de la source lumineuse 16 n° i. Un éclairement lumineux $EL_i$ dans une zone autour du siège 10 n° i est égal à la somme de la valeur d'éclairement lumineux global $EL_{global}$ et de la valeur de complément d'éclairement lumineux $CEL_i$ :

$$EL_i = EL_{global} + CEL_i$$

A l'issue de l'étape 140, le programme 30a passe à l'étape 155.

A l'étape 145, si la valeur de la variable Init est nulle, alors le programme 30a respecte une temporisation qui est paramétrable, sinon le programme 30a passe à l'étape 150.

A l'étape 150, l'unité de commande 27 envoie une consigne correspondant à la valeur $CEL_{min}$ à destination de la source lumineuse 16 n° i. Si la valeur $CEL_{min}$ est en particulier négative, alors l'unité de commande 27 commande l'extinction de la source lumineuse 16 n° i.

A l'étape 155, la valeur du numéro i est N, alors le programme 30a passe à l'étape 160, sinon il retourne à l'étape 120.

A l'étape 160, la variable Init est fixée à 0, puis le programme 30a recommence à l'étape 105.

Il est à noter, que dans le cas où le dispositif d'éclairage 15 ne comprend pas de capteur de présence 24, alors le siège 10 n° i est toujours considéré comme occupé. Le programme passe donc toujours par les étapes 130 à 140 et ne passe pas par les étapes 145 et 150.

Si la valeur d'éclairement lumineux global $EL_{global}$ est supérieure à la valeur minimale d'éclairement lumineux souhaité $EL_{min}$, alors une valeur minimale d'éclairement lumineux atteint est égale à la valeur $EL_{global}$. Si la valeur d'éclairement lumineux global $EL_{global}$ est supérieure à la valeur maximale d'éclairement lumineux souhaité $EL_{max}$, alors une valeur maximale d'éclairement lumineux atteint et la valeur minimale d'éclairement lumineux atteint sont égales à la valeur $EL_{global}$.

Le programme 30b correspondant au système de climatisation 31 comprend deux étapes.

Lors de la première étape, l'unité de commande 27 détermine un nombre NbP de passagers assis dans l'habitacle en fonction de chaque signal fourni par chaque capteur de présence 24, et calcule une position d'ouverture du clapet 32 en fonction du nombre NbP de passagers assis.

Lors de la deuxième étape, l'unité de commande 27 envoie une consigne de la position d'ouverture à destination du clapet 32 d'entrée d'air. Puis, le programme recommence à la première étape afin de déterminer à nouveau le nombre NbP de passagers assis dans l'habitacle, afin de prendre en compte une éventuelle variation du nombre NbP.

Le programme 30c correspondant au moyen d'affichage 36 de l'occupation des sièges 10 débute par l'étape 300, où le nombre NbP de sièges 10 occupés est initialisé à zéro.

A l'étape 305, l'unité de commande 27 initialise le numéro i du siège 10 à zéro.

A l'étape 310, le numéro i du siège 10 est incrémenté d'une unité.

A l'étape 315, l'unité de commande 27 effectue l'acquisition du signal issu du capteur de présence 24 du siège 10 n° i et détermine l'état d'occupation du siège 10 n° i, avant de le stocker dans une zone de la mémoire 29.

A l'étape 320, si le siège 10 n° i est occupé, le programme passe à l'étape 325, et si le siège 10 n° i est libre, le programme passe à l'étape 330.

A l'étape 325, l'unité de commande 27 incrémente la valeur du nombre NbP de passagers assis d'une unité, avant d'envoyer au moyen d'affichage 36 une première consigne pour l'allumage avec la couleur rouge de la diode n° i correspondant au siège 10 n° i et une deuxième consigne avec la valeur du nombre NbP pour la mise à jour de l'affichage à cristaux liquides.

A l'étape 330, l'unité de commande 27 envoie au moyen d'affichage 36 une première consigne pour l'allumage avec la couleur verte de la diode n° i correspondant au siège 10 n° i et une deuxième consigne avec la valeur du nombre NbP pour la mise à jour de l'affichage à cristaux liquides.

A l'étape 335, si la valeur du numéro i est N, alors le programme 30c passe à l'étape suivante 340, sinon il revient à l'étape 310.

A l'étape 340, le numéro i du siège 10 est initialisé à zéro.

A l'étape 345, le numéro i du siège 10 est incrémenté d'une unité.

A l'étape 350, l'unité de commande 27 effectue l'acquisition du signal issu du capteur de présence 24 du siège 10 n° i et détermine l'état d'occupation du siège 10 n° i.

A l'étape 355, l'unité de commande 27 compare l'état d'occupation actuel du siège 10 n° i avec l'état d'occupation précédent du siège 10 n° i, stocké précédemment dans la mémoire 29. Si l'état d'occupation actuel est différent de l'état d'occupation précédent, alors le programme passe à l'étape suivante 360, sinon il passe directement à l'étape 375.

A l'étape 360, si le siège 10 n° i est occupé, le programme passe à l'étape 365, et si le siège 10 n° i est libre, le programme passe à l'étape 370.

A l'étape 365, l'unité de commande 27 incrémente le nombre NbP de passagers assis d'une unité, avant d'envoyer au moyen d'affichage 36 une première consigne pour l'allumage avec la couleur rouge de la diode n° i correspondant au siège 10 n° i et une deuxième consigne avec la valeur NbP pour la mise à jour de l'affichage à cristaux liquides.

A l'étape 370, l'unité de commande 27 décrémente le nombre NbP de passagers assis d'une unité, avant d'envoyer au moyen d'affichage 36 une première consigne pour l'allumage avec la couleur verte de la diode n° i correspondant au siège 10 n° i et une deuxième consigne avec la valeur NbP pour la mise à jour de l'affichage à cristaux liquides.

A l'étape 375, l'unité de commande 27 stocke dans la mémoire 29 l'état d'occupation actuel du siège 10 n° i.

A l'étape 380, si la valeur du numéro i est N, alors le programme 30c revient à l'étape 340, sinon il revient à l'étape 345.

Avant l'entrée des passagers dans la voiture ferroviaire 2, le dispositif d'éclairage 15, le système de climatisation 31, et le moyen d'affichage 36 d'occupation des sièges sont mis sous tension. Comme aucun passager n'est présent dans l'habitacle 6, les capteurs 24 de présence passager ne détectent pas la présence d'un passager et l'unité de commande 27 pilote alors les sources lumineuses 16, afin que l'éclairement lumineux global $EL_{global}$ dans l'habitacle 6 soit égal à la valeur minimale d'éclairement lumineux souhaité $EL_{min}$, soit 50 lux. L'unité de commande 27 envoie également une consigne à destination du clapet d'entrée 32, afin que celui-ci soit dans une position d'ouverture minimale, et une consigne au moyen d'affichage 36, afin que tous les sièges 10 soient indiqués comme étant libres.

Les passagers entrent au fur et à mesure dans la voiture ferroviaire 2 par la plateforme d'accès 4 et peuvent consulter le moyen d'affichage 36, qui indique l'état d'occupation de chaque siège 10, afin de se diriger directement vers un siège 10 libre.

Lorsqu'un passager s'assied sur un siège 10, le capteur de présence 24 du siège 10 détecte la présence du passager et envoie le signal correspondant à l'unité de commande 27. L'unité de commande 27 pilote alors la source lumineuse 16 correspondant audit siège 10, afin que l'éclairement lumineux dans une zone autour du siège 10 soit égal à la valeur maximale d'éclairement lumineux souhaité $EL_{max}$, soit 150 lux.

Le passager a alors la possibilité de régler la puissance émise par la source lumineuse 16, à l'aide de la commande individuelle 18, afin que l'éclairement lumineux dans la zone autour du siège 10 soit compris entre la valeur maximale d'éclairement souhaité $EL_{max}$ et la valeur minimale d'éclairement souhaité $EL_{min}$, c'est-à-dire compris par exemple entre 150 lux et 50 lux. L'unité de commande 27 envoie également une consigne au moyen d'affichage 36, afin que la diode électroluminescente correspondant audit siège 10 soit allumée, pour indiquer que le siège 10 est désormais occupé. L'unité de commande 27 incrémente le nombre NbP de passagers assis d'une unité et détermine une nouvelle position d'ouverture du clapet 32, afin d'augmenter le flux d'air circulant dans les canalisations 34 du système de climatisation 30 pour prendre en compte la présence du passager supplémentaire.

Lorsqu'un passager quitte son siège 10, le capteur de présence 24 dudit siège 10 détecte l'absence de passagers, et envoie le signal correspondant à l'unité de commande 27. L'unité de commande 27 pilote alors, éventuellement après une temporisation, la source lumineuse 16 correspondant audit siège 10 afin que l'éclairement lumineux dans la zone autour dudit siège 10 soit égal à la valeur minimale d'éclairement lumineux souhaité $EL_{min}$, soit par exemple 50 lux. L'unité de commande 27 envoie une nouvelle consigne de position d'ouverture au clapet 32, afin de diminuer le flux d'air dans les canalisations 34, pour prendre en compte la diminution du nombre de passagers présents. Le siège 10 est indiqué comme libre sur le moyen d'affichage 36 suite à l'envoi de la consigne correspondante par l'unité de commande 27.

Lorsque l'éclairement lumineux extérieur augmente, la valeur d'éclairement lumineux global $EL_{global}$ dans l'habitacle 6 augmente et les valeurs des compléments d'éclairement lumineux $CEL_{min}$, $CEL_{max}$, $CEL_i$ diminuent, lorsqu'elles sont de nouveau calculées par l'unité de commande 27. L'unité de commande 27 pilote alors les sources lumineuses 16 afin qu'elles fournissent une moindre puissance lumineuse.

Le dispositif d'éclairage 15 et le système de climatisation 31 de la voiture ferroviaire 2 permettent ainsi de diminuer la consommation d'énergie, en prenant en compte un éclairement lumineux extérieur important ou en prenant en compte une diminution du nombre NbP de passagers assis, lorsqu'un passager quitte son siège 10.

Selon d'autres modes de réalisation, la voiture ferroviaire (2) comprend plusieurs habitacles (6), par exemple un habitacle (6) d'étage inférieur et un habitacle (6) d'étage supérieur. Dans ce cas, chaque habitacle (6) comporte notamment un dispositif d'éclairage (15) et un système de climatisation (31), chaque dispositif d'éclairage (15) étant indépendant du ou des autres dispositifs d'éclairage (15), chaque système de climatisation (31) étant indépendant du ou des autres systèmes de climatisation (31).

Selon d'autres modes de réalisation, le dispositif d'éclairage 15 et le système de climatisation 31 ne comprennent pas de capteurs de présence 24. L'unité de commande 27 pilote alors les sources lumineuses 16, en fonction des signaux reçus du ou des capteur(s) de lumière 22, et des commandes individuelles 18.

Lorsque aucun passager n'est présent dans l'habitacle, l'unité de commande 27 commande les sources lumineuses 16, afin que la valeur d'éclairement lumineux global $EL_{global}$ soit égale à la valeur maximale d'éclairement lumineux souhaité $EL_{max}$, soit par exemple 150 lux.

Lorsque les passagers sont assis sur leur siège 10, la commande individuelle 18 leur permet de faire varier la valeur d'éclairement lumineux dans la zone du siège 10 entre la valeur maximale d'éclairement lumineux souhaité $EL_{max}$, et la valeur minimale d'éclairement lumineux souhaité $EL_{min}$, soit par exemple entre 150 lux et 50 lux.

La position d'ouverture du clapet 32 est prédéterminée, et la plateforme d'accès 4 ne comprend pas de moyen d'affichage 36 de l'occupation des sièges, puisque les capteurs de présence 24 ne sont pas présents.

Selon d'autres modes de réalisation, le moyen d'affichage 36 ne comprend pas d'affichage à cristaux liquides.

Selon d'autres modes de réalisation, l'état d'occupation de chaque siège 10 peut également être réservé, associé par exemple à une couleur orange de la diode. Dans ce cas, l'état réservé de chaque siège 10 n° i est paramétré par un opérateur et n'est pas fonction du signal fourni par chaque capteur de présence 24.

Selon d'autres modes de réalisation, les diodes électroluminescentes sont des diodes aptes à fournir un rayonnement lumineux correspondant à une seule couleur, par exemple le rouge. Dans ce cas, aux étapes 330 et 370 du programme 30c, l'unité de commande 27 envoie notamment une consigne d'extinction de la diode n° i correspondant au siège 10 n° i, à la place de la consigne d'allumage avec la couleur verte de la diode n° i.

Selon d'autres modes de réalisation, le dispositif d'éclairage 15 et le système de climatisation 31 sont utilisés dans un véhicule de transport en commun de type bus ou autocar, dans un véhicule de transport maritime de type bateau, dans un véhicule de transport aérien de type avion.

**Revendications**

1. Véhicule de transport (2) notamment voiture ferroviaire, comprenant au moins un habitacle (6), chaque habitacle (6) comportant une pluralité de sièges (10) pour des passagers, et un dispositif d'éclairage (15) de l'habitacle (6), ledit dispositif comprenant :

   - au moins une source lumineuse (16), fixée à l'intérieur de l'habitacle (6),
   - une unité de commande (27), reliée à la source lumineuse (16),
   - au moins un capteur de lumière (22), relié à l'unité de commande (27) et apte à fournir un signal de mesure de l'éclairement lumineux dans l'habitacle (6),

   l'unité de commande (27) étant apte à déterminer une valeur d'éclairement lumineux global ($EL_{global}$) pour l'habitacle (6) à partir du signal fourni par le ou chaque capteur de lumière (22),
   **caractérisé en ce que** l'unité de commande (27) est apte à :

   - calculer un complément d'éclairement lumineux égal à la différence entre une valeur d'éclairement lumineux souhaité et la valeur d'éclairement lumineux global ($EL_{global}$), et
   - piloter la ou chaque source lumineuse (16), afin qu'elle fournisse une puissance lumineuse correspondant au complément d'éclairement lumineux.

2. Véhicule de transport (2) selon la revendication 1, **caractérisé en ce que** l'unité de commande (27) est apte à :

   - calculer un complément maximal d'éclairement lumineux ($CEL_{max}$) égal à la différence entre une valeur maximale d'éclairement lumineux souhaité ($EL_{max}$) et la valeur d'éclairement lumineux global ($EL_{global}$), et
   - piloter la ou chaque source lumineuse (16), afin qu'elle fournisse une puissance lumineuse correspondant au complément maximal d'éclairement lumineux ($CEL_{max}$).

3. Véhicule de transport (2) selon la revendication 1 ou 2, **caractérisé en ce que** le dispositif d'éclairage (15) comprend :

   - un capteur de présence (24) pour chaque siège (10), propre à fournir un signal d'absence ou de présence du passager, chaque capteur (24) étant relié à l'unité de commande (27),
   - une source lumineuse (16) pour l'éclairage de chaque siège (10),

   et **en ce que** l'unité de commande (27) est apte à piloter chaque source lumineuse (16) en fonction du signal d'absence ou de présence du passager, fourni par chaque capteur de présence (24).

4. Véhicule de transport (2) selon la revendication 1, **caractérisé en ce que** le dispositif d'éclairage (15) comprend :

   - un capteur de présence (24) pour chaque siège (10), propre à fournir un signal d'absence ou de présence du passager, chaque capteur (24) étant relié à l'unité de commande (27),
   - une source lumineuse (16) pour l'éclairage de chaque siège (10),

   et **en ce que** :

   - l'unité de commande (27) est apte, en réponse à un signal d'absence du passager, à calculer un complément minimal d'éclairement lumineux ($CEL_{min}$), égal à la différence entre une valeur minimale d'éclairement souhaité ($EL_{min}$) et la valeur d'éclairement global ($EL_{global}$), et à piloter la source lumineuse (16) pour le siège (10) correspondant audit capteur de présence (24), afin qu'elle fournisse une puissance lumineuse correspondant au complément minimal d'éclairement lumineux ($CEL_{min}$), et
   - l'unité de commande (27) est apte, en réponse à un signal de présence du passager, à piloter la source lumineuse (16) pour le siège (10) correspondant audit capteur de présence (24), afin qu'elle fournisse une puissance lumineuse correspondant au complément maximal d'éclairement lumineux ($CEL_{max}$).

5. Véhicule de transport (2) selon la revendication 1, **caractérisé en ce que** le dispositif d'éclairage (15) comprend :

   - une commande individuelle (18) d'intensité d'éclairage pour chaque siège (10), chaque commande individuelle (18) étant reliée à l'unité de commande (27),
   - une source lumineuse (16) pour l'éclairage de chaque siège (10),

et **en ce que** l'unité de commande (27) est apte, en réponse à un signal de la commande individuelle (18) d'un siège (10), à calculer un complément d'éclairement lumineux (CE-Li) dudit siège (10), compris entre le complément minimal d'éclairement ($CEL_{min}$) et le complément maximal d'éclairement ($CEL_{max}$), et à piloter la source lumineuse (16) correspondant à ladite commande (18), afin qu'elle fournisse une puissance lumineuse correspondant au complément d'éclairement lumineux ($CEL_i$) dudit siège (10).

6. Véhicule de transport (2) selon l'une quelconque des revendications 2, 4 et 5, **caractérisé en ce que** la valeur maximale d'éclairement lumineux souhaité ($EL_{max}$) est 150 lux et la valeur minimale d'éclairement lumineux souhaité ($EL_{min}$) est 50 lux.

7. Véhicule de transport (2) selon l'une quelconque des revendications précédentes, **caractérisé en ce que** la ou chaque source lumineuse (16) comporte au moins une diode électroluminescente.

8. Véhicule de transport (2) selon la revendication 3, comprenant un système de climatisation (31), **caractérisé en ce que** le système de climatisation (31) comprend un clapet (32) d'entrée d'air, et **en ce que** l'unité de commande (27) est apte à déterminer un nombre (NbP) de passagers dans l'habitacle (6) en fonction de chaque signal fourni par chaque capteur de présence (24), et à piloter un débit d'air du système de climatisation (31) en fonction des signaux d'absence ou de présence de passager fournis par les capteurs de présence (24), en commandant une position d'ouverture du clapet (32) en fonction du nombre (NbP) de passagers dans l'habitacle.

9. Véhicule de transport (2) selon l'une quelconque des revendications 3 à 8, **caractérisé en ce qu'**il comprend une plateforme d'accès (4) à l'habitacle (6), et **en ce qu'**un moyen d'affichage (36) de l'occupation des sièges (10), disposé dans la plateforme d'accès (4), est apte à indiquer l'état d'occupation de chaque siège (10), en fonction du signal fourni par le capteur de présence (24) pour ledit siège (10).

10. Procédé d'éclairage d'un habitacle (6) d'un véhicule de transport (2), muni d'un dispositif d'éclairage (15) comprenant au moins une source lumineuse (16), fixée à l'intérieur de l'habitacle (6), une unité de commande (27), reliée à la source lumineuse (16), et dans lequel :

    - on fournit à l'unité de commande (27) un signal de mesure de l'éclairement lumineux dans l'habitacle (6) à l'aide d'un capteur de lumière (22),
    - on détermine à l'aide de l'unité de commande (27) une valeur d'éclairement lumineux global ($EL_{global}$) pour l'habitacle (6) à partir du signal fourni par le ou chaque capteur de lumière (22),

**caractérisé en ce que**:

    - on calcule à l'aide de l'unité de commande (27) un complément d'éclairement lumineux égal à la différence entre une valeur d'éclairement lumineux souhaité et la valeur d'éclairement lumineux global (ELglobal), et
    - on pilote à l'aide de l'unité de commande (27) la ou chaque source lumineuse (16), afin qu'elle fournisse une puissance lumineuse correspondant au complément d'éclairement lumineux.

**Patentansprüche**

1. Transport-Fahrzeug (2), insbesondere Schienen-Fahrzeug, welches mindestens einen Fahrgastraum (6) aufweist, wobei jeder Fahrgastraum (6) eine Mehrzahl an Sitzen (10) für Passagiere und eine Vorrichtung zur Beleuchtung (15) des Fahrgastraums (6) aufweist, wobei die besagte Vorrichtung aufweist:

    - mindestens eine Lichtquelle (16), die am Inneren des Fahrgastraums (6) befestigt ist,
    - eine Steuereinheit (27), die mit der Lichtquelle (16) verbunden ist,
    - mindestens einen Licht-Sensor (22), der mit der Steuereinheit (27) verbunden ist und imstande ist, ein Mess-Signal der Licht-Beleuchtungsstärke in dem Fahrgastraum (6) bereitzustellen,

wobei die Steuereinheit (27) imstande ist, einen Wert der globalen Licht-Beleuchtungsstärke ($EL_{global}$) für den Fahrgastraum (6) ausgehend von dem Signal, das mittels des oder jedes Licht-Sensors (22) bereitgestellt wird, zu ermitteln,
**dadurch gekennzeichnet, dass** die Steuereinheit (27) imstande ist,

EP 2 205 462 B1

- einen Zusatz der Licht-Beleuchtungsstärke zu berechnen, der gleich ist zu der Differenz zwischen einem Wert der gewünschten Licht-Beleuchtungsstärke und dem Wert der globalen Licht-Beleuchtungsstärke ($EL_{global}$), und
- die oder jede Lichtquelle (16) zu steuern, damit sie eine Licht-Stärke bereitstellt, die zu dem Zusatz der Licht-Beleuchtungsstärke korrespondiert.

2. Transport-Fahrzeug (2) gemäß Anspruch 1, **dadurch gekennzeichnet, dass** die Steuereinheit (27) imstande ist:

- einen maximalen Zusatz der Licht-Beleuchtungsstärke ($CEL_{max}$) zu berechnen, der gleich ist zu der Differenz zwischen einem maximalen Wert der gewünschten Licht-Beleuchtungsstärke ($EL_{max}$) und dem Wert der globalen Licht-Beleuchtungsstärke ($EL_{global}$), und
- die oder jede Lichtquelle (16) zu steuern, damit sie eine Licht-Stärke bereitstellt, die zu dem maximalen Zusatz der Licht-Beleuchtungsstärke ($CEL_{max}$) korrespondiert.

3. Transport-Fahrzeug (2) gemäß Anspruch 1 oder 2, **dadurch gekennzeichnet, dass** die Vorrichtung zur Beleuchtung (15) aufweist:

- einen Anwesenheits-Sensor (24) für jeden Sitz (10), der imstande ist, ein Signal der Abwesenheit oder der Anwesenheit des Passagiers bereitzustellen, wobei jeder Sensor (24) mit der Steuereinheit (27) verbunden ist,
- eine Lichtquelle (16) zur Beleuchtung von jedem Sitz (10),

und dadurch, dass die Steuereinheit (27) imstande ist, jede Lichtquelle (16) abhängig von dem Signal der Abwesenheit und der Anwesenheit des Passagiers, das mittels jedes Anwesenheits-Sensors (24) bereitgestellt wird, zu steuern.

4. Transport-Fahrzeug (2) gemäß Anspruch 1, **dadurch gekennzeichnet, dass** die Vorrichtung zur Beleuchtung (15) aufweist:

- einen Anwesenheits-Sensor (24) für jeden Sitz (10), der imstande ist, ein Signal der Abwesenheit oder der Anwesenheit des Passagiers bereitzustellen, wobei jeder Sensor (24) mit der Steuereinheit (27) verbunden ist,
- eine Lichtquelle (16) zur Beleuchtung von jedem Sitz (10),

und dadurch, dass:

- die Steuereinheit (27) imstande ist, als Antwort auf ein Signal der Abwesenheit des Passagiers einen minimalen Zusatz der Licht-Beleuchtungsstärke ($CEL_{min}$) zu berechnen, der gleich ist zu der Differenz zwischen einem minimalen Wert der gewünschten Beleuchtungsstärke ($EL_{min}$) und dem Wert der globalen Beleuchtungsstärke ($EL_{global}$), und die Lichtquelle (16) für den Sitz (10), der zu dem besagten Anwesenheits-Sensor (24) korrespondiert, zu steuern, damit sie eine Licht-Stärke bereitstellt, die zu dem minimalen Zusatz der Licht-Beleuchtungsstärke ($CEL_{min}$) korrespondiert, und
- die Steuereinheit (27) imstande ist, als Antwort auf ein Signal der Anwesenheit des Passagiers die Lichtquelle (16) für den Sitz (10), der zu dem besagten Anwesenheits-Sensor (24) korrespondiert, zu steuern, damit sie eine Licht-Stärke bereitstellt, die zu dem maximalen Zusatz der Licht-Beleuchtungsstärke ($CEL_{max}$) korrespondiert.

5. Transport-Fahrzeug (2) gemäß Anspruch 1, **dadurch gekennzeichnet, dass** die Vorrichtung zur Beleuchtung (15) aufweist:

- eine individuelle Steuerung (18) der Beleuchtungsstärke-Intensität für jeden Sitz (10), wobei jede individuelle Steuerung (18) mit der Steuereinheit (27) verbunden ist,
- eine Lichtquelle (16) zur Beleuchtung von jedem Sitz (10),

und dadurch, dass die Steuereinheit (27) imstande ist, als Antwort auf ein Signal der individuellen Steuerung (18) eines Sitzes (10) einen Zusatz der Licht-Beleuchtungsstärke (CE-Li) des besagten Sitzes (10) zu berechnen, welche zwischen dem minimalen Zusatz der Beleuchtungsstärke ($CEL_{min}$) und dem maximalen Zusatz der Beleuchtungsstärke ($CEL_{max}$) liegt, und die Lichtquelle (16), die zu der besagten Steuerung (18) korrespondiert, zu steuern, damit sie eine Licht-Stärke bereitstellt, die zu dem Zusatz der Licht-Beleuchtungsstärke ($CEL_i$) des besagten Sitzes (10) korrespondiert.

**6.** Transport-Fahrzeug (2) gemäß irgendeinem der Ansprüche 2, 4 und 5, **dadurch gekennzeichnet, dass** der maximale Wert der gewünschten Licht-Beleuchtungsstärke ($EL_{max}$) 150 Lux ist und der minimale Wert der gewünschten Licht-Beleuchtungsstärke ($EL_{min}$) 50 Lux ist.

**7.** Transport-Fahrzeug (2) gemäß irgendeinem der vorherigen Ansprüche, **dadurch gekennzeichnet, dass** die oder jede Lichtquelle (16) mindestens eine Leuchtdiode aufweist.

**8.** Transport-Fahrzeug (2) gemäß Anspruch 3, welches ein Klimatisierungs-System (31) aufweist, **dadurch gekennzeichnet, dass** das Klimatisierungs-System (31) ein Ventil (32) zum Einlass von Luft aufweist, und dadurch, dass die Steuereinheit (27) imstande ist, eine Anzahl (NbP) an Passagieren in dem Fahrgastraum (6) abhängig von jedem Signal, das mittels jedes Anwesenheits-Sensors (24) bereitgestellt wird, zu ermitteln, und einen Luft-Durchfluss des Klimatisierungs-Systems (31) abhängig von den Signalen der Abwesenheit oder der Anwesenheit von Passagieren, welches mittels der Anwesenheits-Sensoren (24) bereitgestellt wird, zu steuern, indem sie eine Öffnungs-Position des Ventils (32) abhängig von der Anzahl (NbP) an Passagieren in dem Fahrgastraum steuert.

**9.** Transport-Fahrzeug (2) gemäß irgendeinem der Ansprüche 3 bis 8, **dadurch gekennzeichnet, dass** es eine Zugangs-Plattform (4) zu dem Fahrgastraum (6) aufweist, und dadurch, dass ein Mittel zur Anzeige (36) der Belegung der Sitze (10), welches in der Zugangs-Plattform (4) angeordnet ist, imstande ist, den Belegungszustand von jedem Sitz (10) abhängig von dem Signal, welches mittels des Anwesenheits-Sensors (24) für den besagten Sitz (10) bereitgestellt wird, anzuzeigen.

**10.** Verfahren zur Beleuchtung eines Fahrgastraums (6) eines TransportFahrzeuges (2), welches mit einer Vorrichtung zur Beleuchtung (15) ausgestattet ist, welche aufweist mindestens eine Lichtquelle (16), die im Inneren des Fahrgastraumes (6) befestigt ist, eine Steuereinheit (27), die mit der Lichtquelle (16) verbunden ist, und wobei:

- man an der Steuereinheit (27) ein Mess-Signal der Licht-Beleuchtungsstärke in dem Fahrgastraum (6) mit Hilfe eines Licht-Sensors (22) bereitstellt,
- man mit Hilfe der Steuereinheit (27) einen Wert der globalen Licht-Beleuchtungsstärke ($EL_{global}$) für den Fahrgastraum (6) ausgehend von dem Signal, das mittels des oder jedes Licht-Sensors (22) bereitgestellt wird, ermittelt,

**dadurch gekennzeichnet, dass**:

- man mit Hilfe der Steuereinheit (27) einen Zusatz der Licht-Beleuchtungsstärke berechnet, der gleich ist zu der Differenz zwischen einem Wert der gewünschten Licht-Beleuchtungsstärke und dem Wert der globalen Licht-Beleuchtungsstärke (ELglobal), und
- man mit Hilfe der Steuereinheit (27) die oder jede Lichtquelle (16) steuert, damit sie eine Licht-Stärke bereitstellt, die zu dem Zusatz der Licht-Beleuchtungsstärke korrespondiert.

**Claims**

**1.** Transport vehicle (2), especially railway carriage, having at least one compartment (6), each compartment (6) having a plurality of seats (10) for passengers, and a lighting device (15) for the compartment (6), said device comprising:

- at least one light source (16) fixed to the interior of the compartment (6),
- a control unit (27) connected to the light source (16),
- at least one light sensor (22) which is connected to the control unit (27) and capable of providing a measurement signal of the illuminance in the compartment (6),

the control unit (27) being capable of determining an overall illuminance value ($EL_{overall}$) for the compartment (6) on the basis of the signal provided by the or each light sensor (22),
**characterised in that** the control unit (27) is capable of:

- calculating an illuminance supplement equal to the difference between a desired illuminance value and the overall illuminance value ($EL_{overall}$), and
- controlling the or each light source (16) so that it provides a lighting power corresponding to the illuminance supplement.

2. Transport vehicle (2) according to claim 1, **characterised in that** the control unit (27) is capable of:

   - calculating a maximum illuminance supplement ($CEL_{max}$) equal to the difference between a maximum desired illuminance value ($EL_{max}$) and the overall illuminance value ($EL_{overall}$), and
   - controlling the or each light source (16) so that it provides a lighting power corresponding to the maximum illuminance supplement ($CEL_{max}$).

3. Transport vehicle (2) according to claim 1 or 2, **characterised in that** the lighting device (15) comprises:

   - a presence sensor (24) for each seat (10), capable of providing a signal indicating the absence or presence of a passenger, each sensor (24) being connected to the control unit (27),
   - a light source (16) for lighting each seat (10),

   and **in that** the control unit (27) is capable of controlling each light source (16) as a function of the signal indicating the absence or presence of a passenger that is provided by each presence sensor (24).

4. Transport vehicle (2) according to claim 1, **characterised in that** the lighting device (15) comprises:

   - a presence sensor (24) for each seat (10), capable of providing a signal indicating the absence or presence of a passenger, each sensor (24) being connected to the control unit (27),
   - a light source (16) for lighting each seat (10),

   and **in that**:

   - the control unit (27) is capable, in response to a signal indicating the absence of a passenger, of calculating a minimum illuminance supplement ($CEL_{min}$), which is equal to the difference between a minimum desired illuminance value ($EL_{min}$) and the overall illuminance value ($EL_{overall}$), and of controlling the light source (16) for the seat (10) corresponding to said presence sensor (24) so that it provides a lighting power corresponding to the minimum illuminance supplement ($CEL_{min}$), and
   - the control unit (27) is capable, in response to a signal indicating the presence of a passenger, of controlling the light source (16) for the seat (10) corresponding to said presence sensor (24) so that it provides a lighting power corresponding to the maximum illuminance supplement ($CEL_{max}$).

5. Transport vehicle (2) according to claim 1, **characterised in that** the lighting device (15) comprises:

   - an individual controller (18) for the lighting intensity for each seat (10), each individual controller (18) being connected to the control unit (27),
   - a light source (16) for lighting each seat (10),

   and **in that** the control unit (27) is capable, in response to a signal from the individual controller (18) of a seat (10), of calculating an illuminance supplement (CE-Li) for said seat (10), in the range between the minimum illuminance supplement ($CEL_{min}$) and the maximum illuminance supplement ($CEL_{max}$), and of controlling the light source (16) corresponding to said controller (18) so that it provides a lighting power corresponding to the illuminance supplement ($CEL_i$) of said seat (10).

6. Transport vehicle (2) according to any one of claims 2, 4 and 5, **characterised in that** the maximum desired illuminance value ($EL_{max}$) is 150 lux and the minimum desired illuminance value ($EL_{min}$) is 50 lux.

7. Transport vehicle (2) according to any one of the preceding claims, **characterised in that** the or each light source (16) comprises at least one electroluminescent diode.

8. Transport vehicle (2) according to claim 3, comprising an air conditioning system (31), **characterised in that** the air conditioning system (31) comprises an air inlet valve (32), and **in that** the control unit (27) is capable of determining a number (NbP) of passengers in the compartment (6) as a function of each signal provided by each presence sensor (24), and of controlling an air flow of the air conditioning system (31) as a function of the signals indicating the absence or presence of a passenger that are provided by the presence sensors (24), by controlling an opening position of the valve (32) as a function of the number (NbP) of passengers in the compartment.

9. Transport vehicle (2) according to any one of claims 3 to 8, **characterised in that** it comprises an access platform (4) to the compartment (6), and **in that** a display means (36) for displaying the occupancy of the seats (10), arranged in the access platform (4), is capable of indicating the state of occupancy of each seat (10), as a function of the signal provided by the presence sensor (24) for said seat (10).

10. Method of lighting a compartment (6) of a transport vehicle (2), equipped with a lighting device (15) comprising at least one light source (16), fixed to the interior of the compartment (6), a control unit (27), connected to the light source (16), and wherein:

- a measurement signal of the illuminance in the compartment (6) is provided to the control unit (27) by means of a light sensor (22),
- an overall illuminance value ($EL_{overall}$) for the compartment (6) is determined by means of the control unit (27), on the basis of the signal provided by the or each light sensor (22),

**characterised in that**:

- an illuminance supplement equal to the difference between a desired illuminance value and the overall illuminance value ($EL_{overall}$) is calculated by means of the control unit (27), and
- the or each light source (27) is controlled by means of the control unit (27) so that it provides a lighting power corresponding to the illuminance supplement.

## FIG.1

## FIG.2

30a

100

Debut
Init = 1

105

Détermination éclairement lumineux global : EL global
Initialisation i / i : = 0

110

Détermination complément minimal éclairement lumineux
CEL min = EL min − EL global

115

Détermination complément maximal éclairement lumineux
CEL max = EL max − EL global

120

Incrémentation i / i : = i + 1

125

Siège n° i occupé ?

oui

non

130

Si Init = 1, consigne pour source
lumineuse n° i à CEL max

145

Si Init = 0, temporisation

135

Détermination Posi de la commande n° i
Détermination CEL i

150

Consigne pour source
lumineuse n° i à CEL min

140

Consigne pour source lumineuse n° i à CEL i

155

i = N ?

non

160

Init = 0

# FIG.3

30c

```
                    ┌─────────────┐
                    │   Debut     │  300
                    │   NbP = 0   │
                    └──────┬──────┘
                           │
                    ┌──────┴──────────────┐  305
                    │ Initialisation i / i : = 0 │
                    └──────┬──────────────┘
                           │
                    ┌──────┴──────────────┐  310
                    │ Incrémentation i / i : = i + 1 │
                    └──────┬──────────────┘
                           │
         ┌─────────────────┴────────────────────────┐  315
         │ Acquisition état d'occupation siège n° i  │
         │ Mémorisation état d'occupation siège n° i │
         └─────────────────┬────────────────────────┘
                           │
              ┌────────────┴────────────┐  320
              │    Siège n° i occupé ?   │
              └────────────┬────────────┘
         oui                           non
```

**Incrémentation NbP / NbP : = NbP + 1**
**Allumage diode n° i en rouge**
**Affichage compteur NbP**    325

**Allumage diode n° i en vert**
**Affichage compteur NbP**    330

```
              ┌────────────┐  335
              │   i = N ?   │
              └──────┬─────┘ non
                   oui
```

**Initialisation i / i : = 0**    340   ← de l'étape 380

**Incrémentation i / i : = i + 1**    345   ← de l'étape 380

**Acquisition état d'occupation siège n° i**    350

non ──── **Etat d'occupation du siège n° i modifié ?**    355

oui

vers l'étape 375

vers l'étape 360

# FIG.4 début

de l'étape 355

Siège n° i occupé ? 360

oui            non

365          370

Incrémentation NbP / NbP : = NbP + 1
Allumage diode n° i en rouge
Affichage compteur NbP

Décrémentation NbP / NbP : = NbP − 1
Allumage diode n° i en vert
Affichage compteur NbP

de l'étape 355

Mémorisation état d'occupation siège n° i 375

380

vers l'étape 340    i = N ?    vers l'étape 345
oui            non

# FIG.4 fin

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2875453 A1
- US 6536928 B1
- US 7221271 B2